# EUROPÄISCHE PATENTANMELDUNG

(11) **EP 4 851 009 A1**
(43) Veröffentlichungstag der Anmeldung: **09.12.2026**
(21) Anmeldenummer: 26176863.4
(22) Anmeldetag: 06.05.2026
(51) Int. Cl.: B61L 15/00, G01M 17/08, G01M 17/10

(54) **VERFAHREN UND EINRICHTUNG ZUR MESSUNGSGESTÜTZTEN VALIDIERUNG MECHANISCHER KOMPONENTEN FÜR SCHIENENFAHRZEUGE**

(30) Priorität: 15.05.2025 AT 503272025
(71) Anmelder: Siemens Mobility Austria GmbH, 1210 Wien (AT)
(72) Erfinder: Obadic, Danijel, 8020 Graz (AT)
(74) Vertreter: Siemens Patent Attorneys

(57) **Zusammenfassung**

Die Erfindung betrifft ein Verfahren zur messungsgestützten Validierung, wobei eine Reaktion einer mechanischen Komponente oder eines zumindest teilweisen mechanischen Systems eines Schienenfahrzeugs auf eine mechanische Belastung erfasst wird und zumindest ein Reaktionswert gebildet wird, und wobei zumindest eine Einflussgröße auf die Belastung erfasst wird und zumindest ein Einflusswert gebildet wird.

Vorgeschlagen wird, dass der zumindest eine Einflusswert zur Berechnung der Reaktion in ein Rechenmodell, in welchem zumindest ein ein Belastungsverhalten der Komponente oder des Systems definierender Parameter implementiert ist, eingegeben wird und zumindest ein Rechenwert bezüglich der Reaktion ermittelt wird, wobei der zumindest eine Reaktionswert mit dem zumindest einen Rechenwert rechnerisch verglichen wird und geprüft wird, ob eine Abweichung zwischen dem zumindest einen Reaktionswert und dem zumindest einen Rechenwert ein definiertes Kriterium erfüllt.

Dadurch kann ein Umfang an Messungen reduziert werden.

## Beschreibung

Die Erfindung betrifft ein Verfahren zur messungsgestützten Validierung mechanischer Komponenten für Schienenfahrzeuge, wobei in einem Messschritt eine Reaktion einer mechanischen Komponente oder eines zumindest teilweisen mechanischen Systems eines Schienenfahrzeugs auf eine mechanische Belastung der Komponente oder des Systems mittels zumindest eines ersten Sensors erfasst wird und zumindest ein Reaktionswert bezüglich der Reaktion gebildet wird, und wobei in dem Messschritt zumindest eine Einflussgröße auf die Belastung mittels des zumindest ersten Sensors oder mittels zumindest eines zweiten Sensors erfasst wird und aus der zumindest einen Einflussgröße zumindest ein Einflusswert gebildet wird.

Bei einer Entwicklung von Schienenfahrzeugen werden häufig Rechenmodelle (beispielsweise Mehrkörpersimulationsmodelle) eingesetzt, deren Simulationsgüte oft im Vorhinein nicht bekannt ist. Deshalb müssen Lastannahmen oder Annahmen über Bauteilparameter etc. zur Verwendung in einer Simulation oft konservativ angesetzt werden, um geforderte Auslegungsergebnisse (z.B. im Hinblick auf ein Laufverhalten eines Schienenfahrzeugs) mit hoher Sicherheit erreichen und in Zulassungsprozessen der Schienenfahrzeuge bestätigen zu können. Nach einer Durchführung von Messungen (z.B. im Rahmen von Mess- oder Zulassungsfahrten etc.) zeigt sich häufig, dass für eine Simulation getroffene Annahmen zu konservativ waren. Nachträgliche Änderungen oder Verbesserungen an Komponenten der Schienenfahrzeuge (beispielsweise durch Optimierung einer Bauteilgeometrie nach einem Simulationsschritt mit abgeschwächten, weniger konservativen Lastannahmen oder abgeschwächten, weniger konservativen Annahmen über Bauteilparameter etc.) haben oft Einfluss auf ein Gesamtverhalten der Schienenfahrzeuge (z.B. fahrdynamischen Einfluss) und/oder auf bestehende Zulassungen. Es ist daher bedeutsam, Auswirkungen von technischen Anpassungen oder Änderungen an den Schienenfahrzeugen präzise einschätzen zu können.

Modelle, mittels welcher derartige Anpassungen und Änderungen bewertet werden können, müssen daher eine hohe Realitätstreue aufweisen.

Beispielsweise sind in der Europäischen Norm (EN) 14363, welche sich auf eine Zulassung fahrtechnischer Eigenschaften von Schienenfahrzeugen bezieht, Validierungsverfahren im Zusammenhang mit fahrdynamischen Bewertungsgrößen (z.B. Rad-Schiene-Kräfte) bei Schienenfahrzeugen beschrieben.

Aus dem Stand der Technik ist beispielsweise die WO 2019/219756 A1 bekannt, welche ein Verfahren und eine Vorrichtung zur Diagnose und Überwachung von Fahrzeugen, Fahrzeugkomponenten, Fahrwegen und Fahrwegkomponenten beschreibt. Signale aus Sensormessungen werden an eine Recheneinheit übertragen. Aus einer statistischen Klassifikation oder einer Prädiktion auf Basis der verarbeiteten Signale wird ein technischer Zustandsindikator gebildet.

Der Erfindung liegt die Aufgabe zugrunde, ein gegenüber dem Stand der Technik weiterentwickeltes Verfahren anzugeben, welches eine messungsgestützte Optimierung von Rechenmodellen ermöglicht.

Erfindungsgemäß wird diese Aufgabe gelöst mit einem Verfahren gemäß Anspruch 1, bei dem in einem Rechenschritt der zumindest eine Einflusswert zur Berechnung der Reaktion in ein in einer Recheneinheit implementiertes, zur Auslegung der Komponente oder des Systems eingerichtetes Rechenmodell, in welchem zumindest ein ein Belastungsverhalten der Komponente oder des Systems definierender Parameter und zumindest ein funktionaler Zusammenhang zwischen der zumindest einen Einflussgröße und dem zumindest einen Parameter einerseits und der Reaktion andererseits implementiert sind, eingegeben wird und mittels des Rechenmodells mit dem zumindest einen Einflusswert und einem Parameterwert des zumindest einen Parameters zumindest ein Rechenwert bezüglich der Reaktion ermittelt wird, wobei in einem Vergleichsschritt der zumindest eine Reaktionswert mit dem zumindest einen Rechenwert rechnerisch verglichen wird und geprüft wird, ob eine Abweichung zwischen dem zumindest einen Reaktionswert und dem zumindest einen Rechenwert ein definiertes Kriterium erfüllt, wodurch ein Angleichungsbedarf des Rechenmodells an ein reales Verhalten der Komponente oder des Systems festgestellt wird.

Durch diese Maßnahme wird eine Angleichung des Rechenmodells und somit eines Modellverhaltens an reale Bedingungen (wie sie beispielsweise bei einer Messung auftreten etc.) ermöglicht. Eine Kenntnis der Abweichung zwischen dem Reaktionswert und dem Rechenwert ermöglicht es, z.B. in das Rechenmodell einzugebende Lastannahmen oder Annahmen über Bauteilparameter etc. anzupassen, um so Rechenergebnisse an Messergebnisse anzunähern. Dadurch kann es beispielsweise möglich werden, weniger konservative Lastannahmen oder weniger konservative Annahmen über Bauteilparameter etc. für eine Auslegung der Komponente anzusetzen und so die Komponente beispielsweise mit weniger Masse auszulegen, ohne eine Einhaltung von Bauteilsicherheiten zu gefährden. Erreicht man durch diese Maßnahme ein realistischeres Rechenmodell, so kann damit beispielsweise eine Reduktion eines Umfangs von Prüfstandversuchen oder Messfahrten zur Validierung eines Auslegungsprozesses der Komponente oder des Systems etc. ermöglicht werden, da mittels des Rechenmodells ein reales Verhalten der Komponente oder des Systems mit höherer Zuverlässigkeit nachgebildet werden kann.

Die Reaktion auf die mechanische Belastung der Komponente oder des Systems kann z.B. eine Beschleunigung oder eine Auslenkung (beispielsweise eine Federauslenkung) etc. sein.

Die Einflussgröße auf die mechanische Belastung charakterisiert die mechanische Belastung, beeinflusst die Reaktion und kann z.B. eine Kraft (beispielsweise eine Federkraft) etc. sein. Der Einflusswert kann beispielsweise ein Kraftwert, ein Drehmomentwert, ein Geschwindigkeitswert, ein Drehzahlwert, ein Gleiskurvenradiuswert, ein Beschleunigungswert, ein Gleisüberhöhungswert oder ein Gleisabweichungswert etc. sein.

Bestimmte physikalische Größen können einerseits Einflussgröße sein, andererseits aber auch die Reaktion charakterisieren. So beeinflusst beispielsweise eine freie Seitenbeschleunigung bei einem Schienenfahrzeug eine Fliehkraft und ist daher Einflussgröße. Eine Längsbeschleunigung eines Schienenfahrzeugs kann beispielsweise eine Reaktion auf ein auf ein Rad wirkendes Antriebs- oder Bremsdrehmoment sein.

Der Parameter, welcher ein Belastungsverhalten (d.h. ein Verhalten unter Belastung) der Komponente oder des Systems definiert, kann beispielsweise eine Federsteifigkeit, eine Masse oder ein Trägheitsmoment etc. sein.

Der in dem Rechenmodell implementierte funktionale Zusammenhang kann z.B. ein Zusammenhang zwischen einer Federsteifigkeit und einer Federauslenkung einerseits und einer Federkraft andererseits, ein Impulssatz, ein Drallsatz oder eine Schwingungsdifferentialgleichung etc. sein.

Weitere vorteilhafte Ausgestaltungen des erfindungsgemäßen Verfahrens ergeben sich aus den Unteransprüchen.

Günstig kann es beispielsweise sein, wenn in einem Optimierungsschritt der Parameterwert des zumindest einen Parameters des Rechenmodells dann variiert wird, wenn die Abweichung zwischen dem zumindest einen Reaktionswert und dem zumindest einen Rechenwert das definierte Kriterium erfüllt, wobei der Parameterwert so variiert wird, dass eine Angleichung des Rechenmodells an das reale Verhalten der Komponente oder des Systems erfolgt.

Durch diese Maßnahme können Abweichungen zwischen Messung und Rechnung auf Grundlage von spezifischen Messergebnissen zumindest teilweise ausgeglichen werden.

Nach einer Variation (z.B. einer Vergrößerung oder einer Verkleinerung) des Parameterwerts kann beispielsweise mittels einer neuerlichen Durchführung des Rechenschritts und des Vergleichsschritts geprüft werden, ob mit dem variierten Parameterwert die Angleichung des Rechenmodells und somit des Modellverhaltens an das reale Verhalten der Komponente oder des Systems erfolgt ist etc.

Der Optimierungsschritt, der Rechenschritt und der Vergleichsschritt können beispielsweise mehrmals durchgeführt werden, wobei der Parameterwert iterativ variiert werden kann, bis die Abweichung zwischen dem Reaktionswert und dem Rechenwert das definierte Kriterium verletzt, d.h. nicht mehr erfüllt, und somit eine ausreichende Angleichung des Rechenmodells und somit des Modellverhaltens an das reale Verhalten der Komponente oder des Systems erreicht ist etc.

Eine erfolgversprechende Umsetzung des erfindungsgemäßen Verfahrens kann mit einer Einrichtung zur messungsgestützten Validierung mechanischer Komponenten für Schienenfahrzeuge, umfassend Mittel zur Durchführung des erfindungsgemäßen Verfahrens, erreicht werden, die Mittel umfassend zumindest einen ersten Sensor und eine Recheneinheit, wobei die Mittel dazu eingerichtet sind, eine Reaktion einer mechanischen Komponente oder eines zumindest teilweisen mechanischen Systems eines Schienenfahrzeugs auf eine mechanische Belastung der Komponente oder des Systems mittels des zumindest ersten Sensors zu erfassen und zumindest einen Reaktionswert bezüglich der Reaktion zu bilden, zumindest eine Einflussgröße auf die Belastung mittels des zumindest ersten Sensors oder mittels zumindest eines zweiten Sensors zu erfassen und aus der zumindest einen Einflussgröße zumindest einen Einflusswert zu bilden, wobei die Mittel ferner dazu eingerichtet sind, den zumindest einen Einflusswert zur Berechnung der Reaktion in ein in der Recheneinheit implementiertes, zur Auslegung der Komponente oder des Systems eingerichtetes Rechenmodell, in welchem zumindest ein ein Belastungsverhalten der Komponente oder des Systems definierender Parameter und zumindest ein funktionaler Zusammenhang zwischen der zumindest einen Einflussgröße und dem zumindest einen Parameter einerseits und der Reaktion andererseits implementiert sind, einzugeben und mittels des Rechenmodells mit dem zumindest einen Einflusswert und einem Parameterwert des zumindest einen Parameters zumindest einen Rechenwert bezüglich der Reaktion zu ermitteln, den zumindest einen Reaktionswert mit dem zumindest einen Rechenwert rechnerisch zu vergleichen und zur Feststellung eines Angleichungsbedarfs des Rechenmodells an ein reales Verhalten der Komponente oder des Systems zu prüfen, ob eine Abweichung zwischen dem zumindest einen Reaktionswert und dem zumindest einen Rechenwert ein definiertes Kriterium erfüllt.

Durch diese Maßnahme wird eine Präzisierung des Rechenmodells auf Basis einer Messung oder einer Mehrzahl an Messungen ermöglicht. Der erste Sensor oder eine Mehrzahl an Sensoren kann beispielsweise in oder an einem Schienenfahrzeug (z.B. an einem Fahrwerk des Schienenfahrzeugs) anordenbar sein. Die Recheneinheit kann in einer Infrastruktureinrichtung (z.B. einer Büroumgebung oder einem Depot) oder ebenfalls in oder an einem Schienenfahrzeug anordenbar sein.

Nachfolgend wird die Erfindung anhand von Ausführungsbeispielen näher erläutert.

Es zeigen beispielhaft:

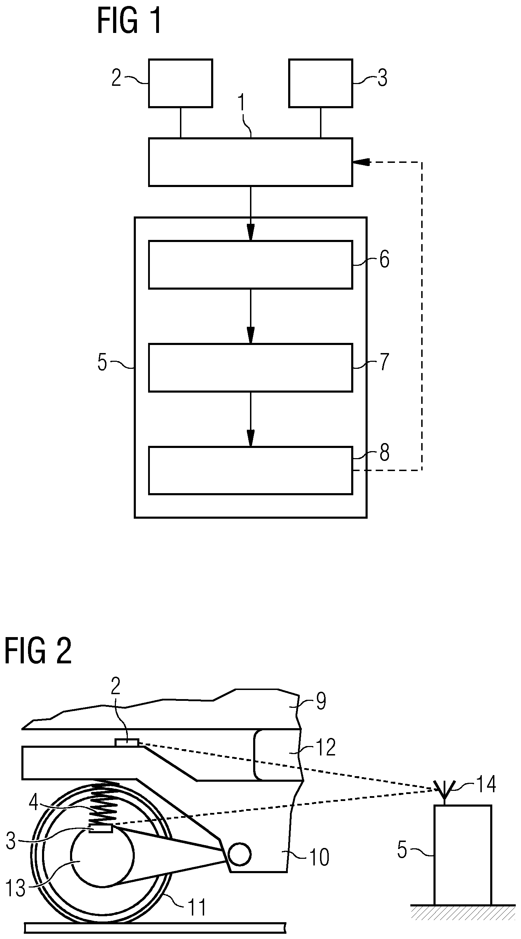

- Fig. 1:: Ein Flussdiagramm zu einer beispielhaften Ausführungsvariante eines erfindungsgemäßen Verfahrens zur messungsgestützten Validierung mechanischer Komponenten für Schienenfahrzeuge, in welchem auch eine beispielhafte Ausführungsvariante einer erfindungsgemäßen Einrichtung zur messungsgestützten Validierung mechanischer Komponenten für Schienenfahrzeuge dargestellt ist, und
- Fig. 2:: Einen schematischen Seitenriss eines Ausschnitts aus einem Schienenfahrzeug mit einem Wagenkasten und einem Fahrwerk sowie jener beispielhaften Einrichtung zur messungsgestützten Validierung mechanischer Komponenten für Schienenfahrzeuge gemäß Fig. 1 mit zwei Sensoren und einer Recheneinheit.

Fig. 1 zeigt eine beispielhafte Ausführungsvariante eines erfindungsgemäßen Verfahrens zur messungsgestützten Validierung mechanischer Komponenten für Schienenfahrzeuge sowie eine beispielhafte Ausführungsvariante einer erfindungsgemäßen Einrichtung zur messungsgestützten Validierung mechanischer Komponenten für Schienenfahrzeuge.

Bei einer Validierung von Simulationsmodellen wird geprüft, ob ein Simulationsmodell ein reales physikalisches System ausreichend genau abbilden kann.

Die Validierung kann eine Vorverarbeitung von Messdaten sowie eine Auswahl, eine Vorverarbeitung und eine Auswertung von Daten aus dem realen System, eine Generierung des Simulationsmodells und von Simulationsszenarien (beispielsweise auf Basis von Messdaten) sowie eine Definition und eine Berechnung geeigneter Metriken zur Bewertung einer Modellgenauigkeit umfassen. Für die Validierung verwendete Daten können beispielsweise während einer Messfahrt eines Schienenfahrzeugs auf einer Strecke erfasste Messdaten sein.

Die Simulationsszenarien können Messszenarien der Messfahrt entsprechen oder davon abgeleitet sein. Die Simulationsszenarien können Kombinationen aus Streckeneigenschaften (z.B. Kurvenradien, Gleisüberhöhungen und/oder Gleisabweichungen wie Gleislagefehler oder Gleisverwindungen etc.) und Betriebsvariablen des Schienenfahrzeugs (z.B. Fahrzeuggeschwindigkeiten und/oder Antriebskräfte etc.) abbilden.

Die Simulationsszenarien können sich beispielsweise u.a. auf einen geraden Streckenabschnitt beziehen, wobei z.B. über eine Distanz von 50 m bis 500 m eine konstante Zugkraft des Schienenfahrzeugs angesetzt werden kann. Die konstante Zugkraft und der gerade Streckenabschnitt ermöglichen eine Validierung quasistatischer Reaktionen von Primärfedern auf die Zugkraft, welche als ein Verhalten von Gesamtsteifigkeiten von Fahrwerken des Schienenfahrzeugs bezüglich der Zugkraft betrachtet werden können. Während der Messfahrt können Sensoren eingesetzt sein, welche beispielsweise nur an einem Fahrwerk des Schienenfahrzeugs angeordnet sein können. Um beide möglichen Fahrtrichtungen dieses Fahrwerks bewerten zu können, kann beispielsweise eine erste Anzahl an Simulationsszenarien auf eine Anordnung des Fahrwerks an einer Vorderseite des Schienenfahrzeugs und eine zweite Anzahl an Simulationsszenarien auf eine Anordnung des Fahrwerks an einer Rückseite des Schienenfahrzeugs bezogen sein.

Die Strecke kann Gleisabweichungen aufweisen, die Bewegungen des Schienenfahrzeugs verursachen können. Zur Berücksichtigung solcher Bewegungen kann in dem Simulationsmodell beispielsweise ein Median (50. Perzentil) von Federwegen der Primärfedern als quasistatischer Wert für die Validierung der quasistatischen Reaktion der Primärfedern auf die Zugkraft angesetzt werden. Gleisabweichungen können in dem Simulationsmodell berücksichtigt werden, es kann aber auch auf eine Berücksichtigung der Gleisabweichungen in dem Simulationsmodell verzichtet werden.

Zur Validierung dynamischer Federwege einschließlich Frequenzinhalte können die Simulationsszenarien Fahrten auf geraden Streckenabschnitten sowie, zur Bewertung einer Fähigkeit des Simulationsmodells, ein Verhalten des Schienenfahrzeugs auch bezüglich Kurvenfahrten und Kurveneinfahrten (z.B. im Hinblick auf Schlingerbewegungen und Reaktionen auf erhöhte Gleisverwindungen etc.) nachzubilden, Kurvenfahrten und Kurveneinfahrten umfassen, wobei gemessene geometrische Gleisabweichungen berücksichtigt werden können.

Die Validierung kann beispielsweise auf Basis von gemessenen und mittels des Simulationsmodells berechneten quasistatischen Federwegen der Primärfedern, von gemessenen und mittels des Simulationsmodells berechneten dynamischen Federwegen der Primärfedern oder/und von gemessenen und mittels des Simulationsmodells berechneten Frequenzinhalten der dynamischen Federwege der Primärfedern durchgeführt werden.

Bei dem Verfahren gemäß Fig. 1 wird zunächst in einem Messschritt 1 eine Reaktion einer mechanischen Komponente eines Schienenfahrzeugs, wie es beispielhaft in Fig. 2 gezeigt ist, auf eine mechanische Belastung der Komponente mittels eines ersten Sensors 2 der Einrichtung erfasst. Der Messschritt 1 wird während einer Messfahrt des Schienenfahrzeugs durchgeführt. Die Komponente ist als Primärfedervorrichtung 4 eines Fahrwerks des Schienenfahrzeugs ausgeführt und Teil eines mechanischen Federsystems des Fahrwerks. Die Belastung wird aufgrund einer periodischen Kraft auf die Primärfedervorrichtung 4 bewirkt. Der erste Sensor 2 ist als Beschleunigungssensor ausgeführt. Aus einem Beschleunigungssignal wird mittels einer ersten Sensorrecheneinheit des ersten Sensors 2 über Integration ein Federauslenkungswert gebildet, welcher als Reaktionswert bezüglich der Reaktion fungiert. Die Reaktion ist somit durch eine Federauslenkung der Primärfedervorrichtung 4 repräsentiert. Erfindungsgemäß ist es jedoch auch vorstellbar, dass der Federauslenkungswert unmittelbar gemessen wird (beispielweise mittels eines Wegsensors etc.), d.h. dass der Reaktionswert unmittelbar aus einer Messung gebildet wird.

Erfindungsgemäß ist es darüber hinaus denkbar, dass der Reaktionswert auf Basis einer Messung in einer Recheneinheit 5 der Einrichtung gebildet wird. Ein solches Vorgehen ist ebenfalls dem Messschritt 1 zugeordnet.

In dem Messschritt 1 wird weiterhin eine Einflussgröße auf die Belastung mittels eines zweiten Sensors 3 der Einrichtung erfasst. Aus der Einflussgröße wird ein Einflusswert gebildet. Der zweite Sensor 3 ist ein Kraftaufnehmer, die Einflussgröße ist die Kraft auf die Primärfedervorrichtung 4 und der Einflusswert ist ein Kraftwert.

Erfindungsgemäß ist es möglich, dass der Einflusswert durch einen Rechenvorgang mittels einer zweiten Sensorrecheneinheit des zweiten Sensors 3 oder mittels der Recheneinheit 5 aus der messtechnisch erfassten Einflussgröße ermittelt wird. Ein solches Vorgehen ist ebenfalls dem Messschritt 1 zugeordnet.

Der erste Sensor 2 und der zweite Sensor 3 sind an dem Fahrwerk angeordnet. Erfindungsgemäß ist es auch vorstellbar, dass die Einflussgröße mittels des ersten Sensors 2 erfasst wird. Beispielsweise kann die Einflussgröße die mittels des ersten Sensors 2 erfasste Beschleunigung eines Abschnitts der Primärfedervorrichtung 4 sein, während der Reaktionswert der aus dem Beschleunigungssignal des ersten Sensors 2 ermittelte Federauslenkungswert ist, etc.

Erfindungsgemäß ist es weiterhin denkbar, dass der Einflusswert ein Drehmomentwert, ein Geschwindigkeitswert, ein Drehzahlwert, ein Gleiskurvenradiuswert, ein Beschleunigungswert, ein Gleisüberhöhungswert oder ein Gleisabweichungswert (beispielsweise ein Gleislagefehlerwert oder ein Gleisverwindungswert etc.) etc. ist.

In einem Rechenschritt 6 wird dann der Einflusswert zur Berechnung der Reaktion in ein Rechenmodell, in welchem ein Belastungsverhalten der Primärfedervorrichtung 4 und somit des Federsystems definierender Parameter implementiert ist und welches in der Recheneinheit 5 der Einrichtung implementiert ist, eingegeben. Bei dem Parameter handelt es sich um eine Federsteifigkeit der Primärfedervorrichtung 4, ein Parameterwert des Parameters ist ein Federsteifigkeitswert.

Die Recheneinheit 5 ist als Computer mit einem Prozessor, Speichern, Software (einem Betriebssystem etc.), Ein- und Ausgabemitteln sowie Datenübertragungsmitteln ausgebildet und in einer Infrastruktureinrichtung angeordnet. Der erste Sensor 2 und der zweite Sensor 3 einerseits und die Recheneinheit 5 andererseits sind über eine Funkdatenverbindung miteinander verbunden, über welche der Reaktionswert von dem ersten Sensor 2 in die Recheneinheit 5 und der Einflusswert von dem zweiten Sensor 3 in die Recheneinheit 5 übertragen wird. Erfindungsgemäß ist es jedoch auch vorstellbar, dass der erste Sensor 2 und der zweite Sensor 3 beispielsweise über eine trennbare Datenkabelverbindung mit der Recheneinheit 5 verbunden sind oder dass eine Datenübertragung zwischen dem ersten Sensor 2 und dem zweiten Sensor 3 einerseits und der Recheneinheit 5 andererseits über einen portablen Datenträger erfolgt etc.

Das Rechenmodell ist ein als Mehrkörpersimulationsmodell ausgeführtes, numerisches Simulationsmodell, mit welchem ein Bewegungsverhalten des Fahrwerks, des Federsystems und somit der Primärfedervorrichtung 4 simuliert und dabei auftretende kinematische Größen (z.B. Auslenkungen, Geschwindigkeiten und Beschleunigungen etc.) sowie Kräfte und Drehmomente (z.B. Kontaktkräfte und Lagerkräfte etc.) ermittelt werden.

Das Fahrwerk ist in dem Rechenmodell nachgebildet und umfasst in dem Rechenmodell eine endliche Anzahl an flexiblen Körpern, welche über masselose kinematische Koppelelemente (z.B. Lager, Gelenke, Federelemente und Dämpferelemente etc.) miteinander gekoppelt sind. Mittels des Mehrkörpersimulationsmodells werden Bewegungsdifferentialgleichungen bezüglich des Fahrwerks aufgestellt und mittels eines Runge-Kutta-Verfahrens gelöst. Mit dem Mehrkörpersimulationsmodell werden das Bewegungsverhalten des Federsystems und somit der Primärfedervorrichtung 4 analysiert und darüber das Federsystem sowie die Primärfedervorrichtung 4 dimensioniert. Das Rechenmodell ist somit zur Auslegung des Federsystems und damit der Primärfedervorrichtung 4 eingerichtet.

In dem Rechenmodell ist ein funktionaler Zusammenhang zwischen der Einflussgröße und dem Parameter einerseits und der Reaktion andererseits implementiert, bei welchem die Federauslenkung als Quotient aus der Kraft auf die Primärfedervorrichtung 4 und der Federsteifigkeit gebildet ist.

So wird mittels des Rechenmodells und damit mittels der Recheneinheit 5 mit dem Kraftwert und dem Federsteifigkeitswert ein Rechenwert bezüglich der Reaktion ermittelt, bei welchem es sich um einen Rechen-Federauslenkungswert der Primärfedervorrichtung 4 handelt.

Bei dem beschriebenen funktionalen Zusammenhang handelt es sich um ein einfaches Beispiel. Erfindungsgemäß ist es auch denkbar, dass der funktionale Zusammenhang beispielsweise als Differentialgleichung oder als Differentialgleichungssystem etc. ausgeführt ist.

In einem Vergleichsschritt 7 wird folglich der Reaktionswert mit dem Rechenwert rechnerisch verglichen und es wird geprüft, ob eine erste Abweichung zwischen dem Reaktionswert und dem Rechenwert ein definiertes erstes Kriterium erfüllt, wodurch ein Angleichungsbedarf des Rechenmodells und somit eines Modellverhaltens an ein reales Verhalten des Federsystems mit der Primärfedervorrichtung 4 festgestellt wird.

Der Vergleichsschritt 7 wird mittels der Recheneinheit 5 vorgenommen.

Das definierte erste Kriterium ist dann erfüllt, wenn ein Absolutbetrag eines Werts der ersten Abweichung größer als ein definierter Grenzwert ist.

Der Wert der ersten Abweichung und der Grenzwert sind Prozentwerte und somit Anteilswerte, wobei der Rechenwert auf den Reaktionswert bezogen ist und der Grenzwert 10% beträgt.

In einem Optimierungsschritt 8, welcher mittels der Recheneinheit 5 durchgeführt wird, wird folglich der Parameterwert des Parameters des Rechenmodells dann variiert, wenn die erste Abweichung zwischen dem Reaktionswert und dem Rechenwert das definierte erste Kriterium erfüllt, wobei der Parameterwert so variiert wird, dass eine Angleichung des Rechenmodells und somit des Modellverhaltens an das reale Verhalten des Federsystems mit der Primärfedervorrichtung 4 erfolgt.

Ist also die erste Abweichung des Rechenwerts von dem Reaktionswert größer als 10% und weist dies darauf hin, dass die Primärfedervorrichtung 4 in dem Rechenmodell ein steiferes Verhalten als messtechnisch ermittelt aufweist, so wird der Parameterwert, welcher ein Federsteifigkeitswert ist, reduziert.

Der Rechenschritt 6 sowie der Vergleichsschritt 7 werden dann mit dem derart variierten Parameterwert neuerlich durchgeführt, wodurch geprüft wird, ob das definierte erste Kriterium mit dem variierten Parameterwert nicht mehr erfüllt ist, d.h. ob mit dem variierten Parameterwert eine ausreichende Angleichung des Rechenmodells und somit des Modellverhaltens an das reale Verhalten des Federsystems mit der Primärfedervorrichtung 4 erfolgt ist.

Erfindungsgemäß ist es auch denkbar, dass in dem Rechenmodell eine Mehrzahl an ein Belastungsverhalten einer Komponente oder eines Systems des Schienenfahrzeugs definierenden Parametern implementiert ist, wobei in dem Optimierungsschritt 8 in Abhängigkeit eines Ergebnisses des Vergleichsschritts 7 eine Mehrzahl an Parameterwerten variiert werden kann, etc.

Erfindungsgemäß ist es möglich, dass der Messschritt 1, der Rechenschritt 6, der Vergleichsschritt 7 und der Optimierungsschritt 8 zyklisch durchgeführt werden etc. Hierbei kann in dem Optimierungsschritt 8 der Parameterwert beispielsweise iterativ variiert werden (z.B. unter Einsatz eines Newton-Verfahrens etc.) und kann nach jeder Iteration durch neuerliche Durchführung des Rechenschritts 6 und des Vergleichsschritts 7 geprüft werden, ob das definierte erste Kriterium nicht mehr erfüllt ist, etc.

Erfindungsgemäß ist es beispielsweise auch vorstellbar, dass in dem Messschritt 1 eine Mehrzahl an Einflussgrößen auf die Reaktion erfasst wird und aus der Mehrzahl an Einflussgrößen eine Mehrzahl an Einflusswerten gebildet wird, wobei in dem Rechenschritt 6 die Mehrzahl an Einflusswerten zur Berechnung der Reaktion in das Rechenmodell eingegeben wird, und wobei die Mehrzahl an Einflusswerten zumindest einen Kraftwert, zumindest einen Drehmomentwert, zumindest einen Geschwindigkeitswert, zumindest einen Drehzahlwert, zumindest einen Gleiskurvenradiuswert, zumindest einen Beschleunigungswert, zumindest einen Gleisüberhöhungswert und/oder zumindest einen Gleisabweichungswert (beispielsweise einen Gleislagefehlerwert oder einen Gleisverwindungswert etc.) etc. umfasst.

Erfindungsgemäß ist es ferner denkbar, dass in dem Messschritt 1 z.B. eine Mehrzahl an Reaktionswerten bezüglich der Reaktion gebildet wird und in dem Rechenschritt 6 eine Mehrzahl an Rechenwerten bezüglich der Reaktion ermittelt wird, wobei in dem Vergleichsschritt 7 ein aus der Mehrzahl an Reaktionswerten gebildetes erstes Amplitudenspektrum mit einem aus der Mehrzahl an Rechenwerten gebildeten zweiten Amplitudenspektrum rechnerisch verglichen wird und geprüft wird, ob eine zweite Abweichung zwischen dem ersten Amplitudenspektrum und dem zweiten Amplitudenspektrum ein definiertes zweites Kriterium erfüllt etc. Hierbei kann beispielsweise geprüft werden, ob ein Absolutbetrag der z.B. aus einem ersten Amplitudenmittelwert des ersten Amplitudenspektrums und einem zweiten Amplitudenmittelwert des zweiten Amplitudenspektrums ermittelten zweiten Abweichung den Grenzwert überschreitet etc.

Erfindungsgemäß ist es darüber hinaus z.B. vorstellbar, dass in dem Messschritt 1 eine Mehrzahl an Reaktionswerten bezüglich der Reaktion gebildet wird und in dem Rechenschritt 6 eine Mehrzahl an Rechenwerten bezüglich der Reaktion ermittelt wird, wobei in dem Vergleichsschritt 7 die Mehrzahl an Reaktionswerten mit der Mehrzahl an Rechenwerten rechnerisch verglichen wird und geprüft wird, ob eine dritte Abweichung zwischen der Mehrzahl an Reaktionswerten und der Mehrzahl an Rechenwerten ein definiertes drittes Kriterium erfüllt, und wobei ein Wert der dritten Abweichung ein Mittelwert oder eine Standardabweichung einer Wertereihe oder eines Werteverlaufs, welche oder welcher die dritte Abweichung charakterisiert, ist etc. Das dritte Kriterium kann beispielsweise einen Grenzwertvergleich umfassen etc.

Erfindungsgemäß ist es weiterhin möglich, dass beispielsweise der Wert der dritten Abweichung auf einen in dem Messschritt 1 ermittelten Extremwert der Reaktion (beispielsweise auf einen Federauslenkungsmaximalwert etc.) normiert ist.

Erfindungsgemäß ist es darüber hinaus denkbar, das Verfahren auf eine Mehrzahl an Federvorrichtungen des Federsystems anzuwenden.

In Fig. 2 ist ein schematischer Seitenriss eines Ausschnitts aus einem Schienenfahrzeug mit einem Wagenkasten 9 und einem Fahrwerk sowie jener beispielhaften Einrichtung zur messungsgestützten Validierung mechanischer Komponenten für Schienenfahrzeuge gemäß Fig. 1 mit einem ersten Sensor 2, einem zweiten Sensor 3 und einer Recheneinheit 5 dargestellt.

Das Fahrwerk umfasst einen Fahrwerksrahmen 10, mit welchem ein erster Radsatz 11 und ein in Fig. 2 nicht gezeigter zweiter Radsatz gekoppelt sind. Der Wagenkasten 9 ist über eine Sekundärfedervorrichtung 12 eines Federsystems des Fahrwerks, die als Luftfedervorrichtung ausgebildet ist, mit dem Fahrwerksrahmen 10 verbunden.

Zwischen einem Radsatzlagergehäuse 13 eines Radsatzlagers, über welches der erste Radsatz 11 gelagert ist, und dem Fahrwerksrahmen 10 ist eine Primärfedervorrichtung 4 des Federsystems, d.h. eine mechanische Komponente eines mechanischen Systems angeordnet.

Der erste Sensor 2 ist als Beschleunigungssensor ausgeführt und mit dem Fahrwerksrahmen 10, im Bereich der Primärfedervorrichtung 4, verbunden. Aus mittels des ersten Sensors 2 erfassten Beschleunigungssignalen können über Integration Federauslenkungswerte bezüglich der Primärfedervorrichtung 4 gebildet werden. Die Federauslenkungswerte können in einem Verfahren gemäß Fig. 1 eingesetzt werden.

An einem unteren Ende der Primärfedervorrichtung 4 ist der zweite Sensor 3 mit der Primärfedervorrichtung 4 und dem Radsatzlagergehäuse 13 verbunden. Der zweite Sensor 3 ist als piezoelektrischer Sensor zur Messung von Primärfederfederkräften, d.h. als Kraftaufnehmer ausgebildet. Mit dem piezoelektrischen Sensor können dynamische Primärfederkräfte mit hoher Genauigkeit gemessen werden. Entsprechende Kraftwerte können in dem Verfahren gemäß Fig. 1 eingesetzt werden.

Erfindungsgemäß ist es jedoch auch denkbar, den zweiten Sensor 3 z.B. als Dehnungsmessstreifen auszuführen, mit welchem insbesondere statische Primärfederkräfte mit hoher Genauigkeit gemessen werden können, etc.

Der erste Sensor 2 und der zweite Sensor 3 sind als Funksensoren ausgebildet.

Die Recheneinheit 5 ist als Computer mit einem Prozessor, Speichern, Software (einem Betriebssystem etc.), Ein- und Ausgabemitteln sowie Datenübertragungsmitteln ausgebildet und in einer in Fig. 2 nicht dargestellten Infrastruktureinrichtung angeordnet.

In der Recheneinheit 5 ist ein im Zusammenhang mit Fig. 1 beschriebenes Rechenmodell implementiert.

Der erste Sensor 2 und der zweite Sensor 3 einerseits und die Recheneinheit 5 andererseits sind über eine Funkdatenverbindung miteinander verbunden, über welche eine Datenübertragung zwischen dem ersten Sensor 2 und dem zweiten Sensor 3 einerseits und der Recheneinheit 5 andererseits erfolgen kann. Zum Empfangen und Senden von Funksignalen weist die Recheneinheit 5 eine Antenne 14 auf.

Erfindungsgemäß ist es jedoch auch vorstellbar, dass der erste Sensor 2 und der zweite Sensor 3 beispielsweise über eine trennbare Datenkabelverbindung mit der Recheneinheit 5 verbunden sind oder dass eine Datenübertragung zwischen dem ersten Sensor 2 und dem zweiten Sensor 3 einerseits und der Recheneinheit 5 andererseits über einen portablen Datenträger erfolgt etc.

Die Einrichtung umfasst Mittel zur Durchführung des Verfahrens gemäß Fig. 1, wobei diese Mittel den ersten Sensor 2, den zweiten Sensor 3 und die Recheneinheit 5 umfassen. Die Mittel sind u.a. dazu eingerichtet, eine Reaktion des Federsystems des Fahrwerks mit der Primärfedervorrichtung 4 auf eine mechanische Belastung des Federsystems mit der Primärfedervorrichtung 4 mittels des ersten Sensors 2 zu erfassen und einen Reaktionswert bezüglich der Reaktion zu bilden, eine Einflussgröße auf die Belastung mittels des zweiten Sensors 3 zu erfassen und aus der Einflussgröße einen Einflusswert zu bilden. Die Mittel sind ferner dazu eingerichtet, den Einflusswert zur Berechnung der Reaktion in das in der Recheneinheit 5 implementierte, zur Auslegung des Federsystems mit der Primärfedervorrichtung 4 eingerichtete Rechenmodell, in welchem ein ein Belastungsverhalten des Federsystems mit der Primärfedervorrichtung 4 definierender Parameter und ein funktionaler Zusammenhang zwischen der Einflussgröße und dem Parameter einerseits und der Reaktion andererseits implementiert sind, einzugeben und mittels des Rechenmodells mit dem Einflusswert und einem Parameterwert des Parameters einen Rechenwert bezüglich der Reaktion zu ermitteln, den Reaktionswert mit dem Rechenwert rechnerisch zu vergleichen und zur Feststellung eines Angleichungsbedarfs des Rechenmodells und somit ein Modellverhalten an ein reales Verhalten des Federsystems mit der Primärfedervorrichtung 4 zu prüfen, ob eine Abweichung zwischen dem Reaktionswert und dem Rechenwert ein definiertes Kriterium erfüllt. Erfindungsgemäß ist es beispielsweise auch vorstellbar, auch die Einflussgröße mittels des ersten Sensors 2 zu erfassen etc.

*Unabhängig vom grammatikalischen Geschlecht eines bestimmten Begriffes sind Personen mit männlicher, weiblicher oder anderer Geschlechteridentität mit umfasst.*

### Bezugszeichenliste

- 1: Messschritt
- 2: Erster Sensor
- 3: Zweiter Sensor
- 4: Primärfedervorrichtung
- 5: Recheneinheit
- 6: Rechenschritt
- 7: Vergleichsschritt
- 8: Optimierungsschritt
- 9: Wagenkasten
- 10: Fahrwerksrahmen
- 11: Erster Radsatz
- 12: Sekundärfedervorrichtung
- 13: Radsatzlagergehäuse
- 14: Antenne

## Patentansprüche

1. Verfahren zur messungsgestützten Validierung mechanischer Komponenten für Schienenfahrzeuge, wobei in einem Messschritt (1) eine Reaktion einer mechanischen Komponente oder eines zumindest teilweisen mechanischen Systems eines Schienenfahrzeugs auf eine mechanische Belastung der Komponente oder des Systems mittels zumindest eines ersten Sensors (2) erfasst wird und zumindest ein Reaktionswert bezüglich der Reaktion gebildet wird, und wobei in dem Messschritt (1) zumindest eine Einflussgröße auf die Belastung mittels des zumindest ersten Sensors (2) oder mittels zumindest eines zweiten Sensors (3) erfasst wird und aus der zumindest einen Einflussgröße zumindest ein Einflusswert gebildet wird, **dadurch gekennzeichnet, dass** in einem Rechenschritt (6) der zumindest eine Einflusswert zur Berechnung der Reaktion in ein in einer Recheneinheit (5) implementiertes, zur Auslegung der Komponente oder des Systems eingerichtetes Rechenmodell, in welchem zumindest ein ein Belastungsverhalten der Komponente oder des Systems definierender Parameter und zumindest ein funktionaler Zusammenhang zwischen der zumindest einen Einflussgröße und dem zumindest einen Parameter einerseits und der Reaktion andererseits implementiert sind, eingegeben wird und mittels des Rechenmodells mit dem zumindest einen Einflusswert und einem Parameterwert des zumindest einen Parameters zumindest ein Rechenwert bezüglich der Reaktion ermittelt wird, wobei in einem Vergleichsschritt (7) der zumindest eine Reaktionswert mit dem zumindest einen Rechenwert rechnerisch verglichen wird und geprüft wird, ob eine Abweichung zwischen dem zumindest einen Reaktionswert und dem zumindest einen Rechenwert ein definiertes Kriterium erfüllt, wodurch ein Angleichungsbedarf des Rechenmodells an ein reales Verhalten der Komponente oder des Systems festgestellt wird.

2. Verfahren nach Anspruch 1, **dadurch gekennzeichnet, dass** in einem Optimierungsschritt (8) der Parameterwert des zumindest einen Parameters des Rechenmodells dann variiert wird, wenn die Abweichung zwischen dem zumindest einen Reaktionswert und dem zumindest einen Rechenwert das definierte Kriterium erfüllt, wobei der Parameterwert so variiert wird, dass eine Angleichung des Rechenmodells an das reale Verhalten der Komponente oder des Systems erfolgt.

3. Verfahren nach Anspruch 1 oder 2, **dadurch gekennzeichnet, dass** in dem Messschritt (1) eine Mehrzahl an Reaktionswerten bezüglich der Reaktion gebildet wird und in dem Rechenschritt (6) eine Mehrzahl an Rechenwerten bezüglich der Reaktion ermittelt wird, wobei in dem Vergleichsschritt (7) ein aus der Mehrzahl an Reaktionswerten gebildetes erstes Amplitudenspektrum mit einem aus der Mehrzahl an Rechenwerten gebildeten zweiten Amplitudenspektrum rechnerisch verglichen wird und geprüft wird, ob eine Abweichung zwischen dem ersten Amplitudenspektrum und dem zweiten Amplitudenspektrum ein definiertes Kriterium erfüllt.

4. Verfahren nach einem der Ansprüche 1 bis 3, **dadurch gekennzeichnet, dass** der zumindest eine Reaktionswert und der zumindest eine Rechenwert Auslenkungswerte sind.

5. Verfahren nach Anspruch 4, **dadurch gekennzeichnet, dass** die Auslenkungswerte Federauslenkungswerte sind.

6. Verfahren nach einem der Ansprüche 1 bis 5, **dadurch gekennzeichnet, dass** das definierte Kriterium dann erfüllt ist, wenn ein Absolutbetrag zumindest eines Werts der Abweichung größer als ein definierter Grenzwert ist.

7. Verfahren nach Anspruch 6, **dadurch gekennzeichnet, dass** der zumindest eine Wert der Abweichung und der Grenzwert Anteilswerte sind, wobei der Grenzwert 10% beträgt.

8. Verfahren nach Anspruch 6 oder 7, **dadurch gekennzeichnet, dass** in dem Messschritt (1) eine Mehrzahl an Reaktionswerten bezüglich der Reaktion gebildet wird und in dem Rechenschritt (6) eine Mehrzahl an Rechenwerten bezüglich der Reaktion ermittelt wird, wobei in dem Vergleichsschritt (7) die Mehrzahl an Reaktionswerten mit der Mehrzahl an Rechenwerten rechnerisch verglichen wird und geprüft wird, ob eine Abweichung zwischen der Mehrzahl an Reaktionswerten und der Mehrzahl an Rechenwerten ein definiertes Kriterium erfüllt, und wobei der zumindest eine Wert der Abweichung ein Mittelwert einer Wertereihe oder eines Werteverlaufs, welche oder welcher die Abweichung charakterisiert, ist.

9. Verfahren nach Anspruch 6 oder 7, **dadurch gekennzeichnet, dass** in dem Messschritt (1) eine Mehrzahl an Reaktionswerten bezüglich der Reaktion gebildet wird und in dem Rechenschritt (6) eine Mehrzahl an Rechenwerten bezüglich der Reaktion ermittelt wird, wobei in dem Vergleichsschritt (7) die Mehrzahl an Reaktionswerten mit der Mehrzahl an Rechenwerten rechnerisch verglichen wird und geprüft wird, ob eine Abweichung zwischen der Mehrzahl an Reaktionswerten und der Mehrzahl an Rechenwerten ein definiertes Kriterium erfüllt, und wobei der zumindest eine Wert der Abweichung eine Standardabweichung einer Wertereihe oder eines Werteverlaufs, welche oder welcher die Abweichung charakterisiert, ist.

10. Verfahren nach einem der Ansprüche 6 bis 9, **dadurch gekennzeichnet, dass** der zumindest eine Wert der Abweichung auf einen in dem Messschritt (1) ermittelten Extremwert der Reaktion normiert ist.

11. Verfahren nach einem der Ansprüche 1 bis 10, **dadurch gekennzeichnet, dass** der zumindest eine Einflusswert ein Kraftwert, ein Drehmomentwert, ein Geschwindigkeitswert, ein Drehzahlwert, ein Gleiskurvenradiuswert, ein Beschleunigungswert, ein Gleisüberhöhungswert oder ein Gleisabweichungswert ist.

12. Verfahren nach einem der Ansprüche 1 bis 10, **dadurch gekennzeichnet, dass** in dem Messschritt (1) eine Mehrzahl an Einflussgrößen auf die Reaktion erfasst wird und aus der Mehrzahl an Einflussgrößen eine Mehrzahl an Einflusswerten gebildet wird, wobei in dem Rechenschritt (6) die Mehrzahl an Einflusswerten zur Berechnung der Reaktion in das Rechenmodell eingegeben wird, und wobei die Mehrzahl an Einflusswerten zumindest einen Kraftwert, zumindest einen Drehmomentwert, zumindest einen Geschwindigkeitswert, zumindest einen Drehzahlwert, zumindest einen Gleiskurvenradiuswert, zumindest einen Beschleunigungswert, zumindest einen Gleisüberhöhungswert und/oder zumindest einen Gleisabweichungswert umfasst.

13. Verfahren nach einem der Ansprüche 1 bis 12, **dadurch gekennzeichnet, dass** das Rechenmodell ein Mehrkörpersimulationsmodell ist.

14. Verfahren nach einem der Ansprüche 1 bis 13, **dadurch gekennzeichnet, dass** der Messschritt (1) während einer Messfahrt eines Schienenfahrzeugs durchgeführt wird.

15. Einrichtung zur messungsgestützten Validierung mechanischer Komponenten für Schienenfahrzeuge, umfassend Mittel zur Durchführung des Verfahrens nach einem der Ansprüche 1 bis 14, die Mittel umfassend zumindest einen ersten Sensor (2) und eine Recheneinheit (5), wobei die Mittel dazu eingerichtet sind, eine Reaktion einer mechanischen Komponente oder eines zumindest teilweisen mechanischen Systems eines Schienenfahrzeugs auf eine mechanische Belastung der Komponente oder des Systems mittels des zumindest ersten Sensors (2) zu erfassen und zumindest einen Reaktionswert bezüglich der Reaktion zu bilden, zumindest eine Einflussgröße auf die Belastung mittels des zumindest ersten Sensors (2) oder mittels zumindest eines zweiten Sensors (3) zu erfassen und aus der zumindest einen Einflussgröße zumindest einen Einflusswert zu bilden, **dadurch gekennzeichnet, dass** die Mittel dazu eingerichtet sind, den zumindest einen Einflusswert zur Berechnung der Reaktion in ein in der Recheneinheit (5) implementiertes, zur Auslegung der Komponente oder des Systems eingerichtetes Rechenmodell, in welchem zumindest ein ein Belastungsverhalten der Komponente oder des Systems definierender Parameter und zumindest ein funktionaler Zusammenhang zwischen der zumindest einen Einflussgröße und dem zumindest einen Parameter einerseits und der Reaktion andererseits implementiert sind, einzugeben und mittels des Rechenmodells mit dem zumindest einen Einflusswert und einem Parameterwert des zumindest einen Parameters zumindest einen Rechenwert bezüglich der Reaktion zu ermitteln, den zumindest einen Reaktionswert mit dem zumindest einen Rechenwert rechnerisch zu vergleichen und zur Feststellung eines Angleichungsbedarfs des Rechenmodells an ein reales Verhalten der Komponente oder des Systems zu prüfen, ob eine Abweichung zwischen dem zumindest einen Reaktionswert und dem zumindest einen Rechenwert ein definiertes Kriterium erfüllt.
